Europäisches Patentamt

European Patent Office

Office européen des brevets

(19)

(11) Veröffentlichungsnummer : **0 154 155**
**B1**

(12) # EUROPÄISCHE PATENTSCHRIFT

(45) Veröffentlichungstag der Patentschrift :
15.04.87

(21) Anmeldenummer : 85100881.3

(22) Anmeldetag : 29.01.85

(51) Int. Cl.⁴ : **E 05 F 15/10**

(54) **Schwenkantrieb.**

(30) Priorität : 02.02.84 DE 3403561

(43) Veröffentlichungstag der Anmeldung :
11.09.85 Patentblatt 85/37

(45) Bekanntmachung des Hinweises auf die Patenterteilung : 15.04.87 Patentblatt 87/16

(84) Benannte Vertragsstaaten :
IT NL

(56) Entgegenhaltungen :
AT-B- 14 778
DE-A- 2 114 980
DE-A- 2 727 518
DE-C- 1 155 950
FR-A- 1 294 614
GB-A- 2 027 793

(73) Patentinhaber : Rhein-Getriebe GmbH
Grünstrasse 34
D-4005 Meerbusch 1 (DE)

(72) Erfinder : Bannier, Georg
Essener Strasse 6
D-4044 Kaarst 2 (DE)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)

## Beschreibung

Die Erfindung betrifft einen Schwenkantrieb mit einem selbsthemmenden Schneckengetriebe, dessen Schnecke axial schwimmend gelagert und beidseitig in Axialrichtung federvorgespannt ist, über die ein erster und ein zweiter Endschalter zur Abschaltung jeweils für eine Drehrichtung bei Überschreiten einer ersten vorbestimmten Kraft über entsprechende Betätigungsflächen betätigbar sind.

Aus der DE-A-2 114 980 ist ein Antrieb für Filterplatten bekannt, der entsprechend dem Schwenkantrieb der eingangs genannten Art ausgebildet ist. Die dort vorgesehenen Endschalter dienen dazu, den Antrieb bei Erreichen einer vorbestimmten Kraft abzuschalten und dann die Drehrichtung umzukehren. Ein solcher Antrieb eignet sich aber nicht dazu, in einer Endstellung eine Haltekraft auszuüben und führt auch nicht zum Abstellen des Antriebs in einer Notsituation.

Ferner ist aus der DE-A-1 155 950 ein Antrieb bekannt, bei dem auf der Antriebswelle des Antriebsaggregats ein axial verschiebbar gelagertes und beidseitig federvorgespanntes Ritzel angeordnet ist, das ein Zahnrad treibt, das über eine Spindel ein zu bewegendes Teil antreibt. Beidseitig von dem Ritzel ist jeweils ein Endschalter angeordnet, die bei Verschiebung des Ritzels entgegen der Federkraft bei Auftreten eines Hindernisses im Weg des zu bewegenden Teils zur Kraftabschaltung führen. In der jeweiligen Endstellung des zu bewegenden Teils dient der jeweilige Endschalter ebenfalls zur Kraftabschaltung. Zusätzlich sind zwei Überbrückungsschalter vorgesehen, die kurz vor Erreichen der jeweiligen Endstellung betätigt werden und den in anderer Kraftrichtung wirkenden Endschalter überbrücken, damit im Falle einer Notsituation, etwa bei festgefressenem Teil, die vom Antriebsaggregat aufgebrachte Kraft nicht durch den jeweiligen Endschalter begrenzt wird. Hierdurch erfolgt zwar ein Abstellen des Antriebs bei Auftreten eines Hindernisses, jedoch kann in der Endstellung keine Haltekraft ausgeübt werden.

Wenn Tore o. dgl. mittels eines Antriebs verschwenkt werden, müssen Maßnahmen getroffen werden, um dann, wenn ein Gegenstand in den Schwenkbereich gelangt, beispielsweise ein Hund, Kind o. dgl., den Antrieb abzustellen. Andererseits wäre es jedoch zweckmäßig, wenn auf das Tor eine große Schließkraft im geschlossenen Zustand ausgeübt wird, so daß es nicht von Unbefugten geöffnet werden kann, selbst wenn es nicht abgeschlossen oder nicht abschließbar ist.

Aufgabe der Erfindung ist es daher, einen Schwenkantrieb der eingangs genannten Art zu schaffen, der sich im Schwenkbereich bei Auftreten eines Hindernisses abstellt und in der Endstellung eine große Haltekraft ausübt sowie konstruktionsmäßig einfach ist.

Diese Aufgabe wird dadurch gelöst, daß ein dritter Endschalter, der bezüglich der Betätigungsfläche für den ersten Endschalter in größerem Abstand entsprechend einer zweiten größeren vorbestimmten Kraft angeordnet ist, und für den ersten Endschalter ein Überbrückungsschalter vorgesehen ist, der durch ein von dem Schneckengetriebe bewegtes Teil kurz vor Erreichen der Endstellung dieses Teils betätigbar ist.

Hierdurch wird erreicht, daß die Schnecke des Schneckenantriebs gegen die Kraft von sie beaufschlagenden Federpaketen axial verschoben wird, wenn ein Hindernis im Schwenkbereich oder ein die Endstellung festlegender Anschlag auftritt, wodurch auf das Schneckenrad eine entsprechende Kraft ausgeübt wird, die in die Axialbewegung der Schnecke umgesetzt wird.

Letztere wird durch Endschalter abgetastet, wobei zwei Endschalter vorgesehen sind, die auf eine geringe Axialverschiebung in der einen bzw. anderen Richtung ansprechen, während ein weiterer Endschalter vorgesehen ist, der auf eine größere Axialverschiebung zur Ausübung einer großen Haltekraft in der geschlossenen Endstellung des verschwenkten Gegenstandes anspricht, so daß eine Zweistufenkraftabschaltung vorgesehen ist.

Weitere Ausgestaltungen der Erfindung sind den Unteransprüchen der nachfolgenden Beschreibung zu entnehmen.

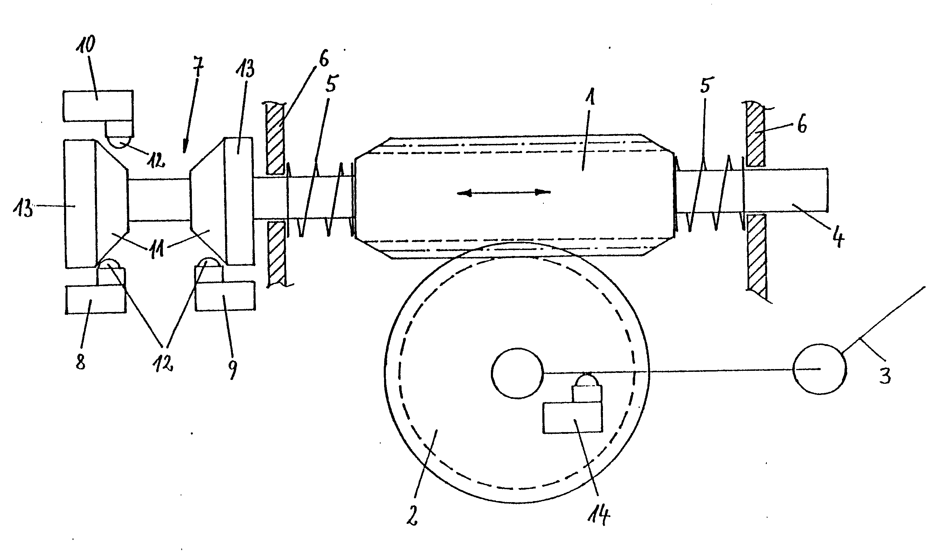

Die Erfindung wird nachstehend anhand des in der beigefügten Abbildung dargestellten Ausführungsbeispiels näher erläutert.

Der schematisch dargestellte Schwenkantrieb umfaßt ein von einem nicht dargestellten Motor antreibbares Schneckengetriebe mit einer Schnecke 1 und einem Schneckenrad 2, das seinerseits einen Gegenstand, etwa ein Tor o. dgl., verschwenkt. Die Schnecke 1 befindet sich auf einer Schneckenwelle 4, die axial schwimmend in einem nicht dargestellten Gehäuse gelagert ist. Beidseitig der Schnecke 1 ist jeweils ein Federpaket 5 angeordnet, das sich einerseits an einem gehäusefesten Teil 6 und andererseits an der Schnecke 1 bzw. einem Bund der Schneckenwelle 4 abstützt. Ferner befindet sich auf der Schneckenwelle 4 ein Schaltstück 7 für Endschalter 8, 9 und 10. Das Schaltstück 7 besitzt zwei einander zugewandte konische Auflaufflächen 11, die bei Auflaufen auf die Betätigungsorgane 12 der Endschalter 8, 9, 10 diese fortschreitend eindrücken, wonach sie durch die Ringflächen 13 eingedrückt gehalten werden. Das Schaltstück 7 ist zweckmäßig garnrollenförmig ausgebildet.

Die Endschalter 8, 9 befinden sich mit ihren Betätigungsorganen 12 in geringer Entfernung von den beiden Auflaufflächen 11, während der Endschalter 10 in größerer Entfernung von der Auflauffläche 11, die zur Schnecke 1 gerichtet ist, angeordnet ist. Die Einstellung der Abstände der Betätigungsorgane 12 von den Ringflächen 13 bzw. Auflaufflächen 11 des Schaltstücks 7 kann beispielsweise über Spindeln erfolgen, die in dem Antriebsgehäuse von außen zugänglich angeordnet sind. Hierbei kann für die Endschalter 8, 9 eine Rechts-/Linksspindel verwendet werden.

Bei Verschwenken eines Tors durch den Schwenkantrieb wird die Schwenkbewegung dann unterbrochen, wenn das Tor auf ein Hindernis stößt. Da sich das Schneckenrad 2 in diesem Moment nicht mehr drehen kann, versetzt sich die axial schwimmend gelagerte Schnecke 1 in der einen oder anderen axialen Richtung abhängig von der Drehrichtung der Schnecke 1. Somit wird dann auch das auf der Schneckenwelle 4 sitzende Schaltstück 7 in axialer Richtung versetzt und betätigt den Endschalter 8 oder 9, der den Antrieb abstellt. Für diese Kraftabschaltung ist nur eine geringe Kraft notwendig, da die Endschalter 8, 9 sehr nahe zu den Ringflächen 13 angeordnet sind, so daß nur eine geringe axiale Verschiebung der Schnecke 1 gegen die Kraft der Federpakete 5 genügt, um diese Endschalter 8, 9 zu betätigen.

Der Endschalter 10 wird dagegen erst bei einer größeren Axialverschiebung der Schnecke 1 betätigt, wodurch die Kraftabschaltung erfolgt, jedoch infolge der Selbsthemmung des Schneckengetriebes und der Verschiebung der Schnecke 1 eine große Schließkraft auf das Tor ausgeübt wird, die zum Zuhalten des Tors dient. Diese Schließkraft ist durch Einstellung des Abstandes des Betätigungsorgans 12 des Endschalters 10 von der der Schnecke 1 abgewandten Ringfläche 13 einstellbar. Im geöffneten Zustand des Tors genügt die Selbsthemmung des Schneckengetriebes, um das Tor offen zu halten.

Ferner ist ein Überbrückungsschalter 14 für den Endschalter 8 vorgesehen, der kurz vor dem Endanschlag des Tores durch ein von dem Schneckengetriebe bewegtes Teil (3) betätigt wird, so daß sichergestellt wird, daß die Schnecke 1 um die Strecke axial verschoben wird, die notwendig ist, um den Endschalter 10 zu betätigen, so daß die gewünschte Schließkraft erreicht wird.

## Patentansprüche

1. Schwenkantrieb mit einem selbsthemmenden Schneckengetriebe, dessen Schnecke (1) axial schwimmend gelagert und beidseitig in Axialrichtung federvorgespannt ist, über die ein erster und ein zweiter Endschalter (8, 9) zur Abschaltung jeweils für eine Drehrichtung bei Überschreiten einer ersten vorbestimmten Kraft über entsprechende Betätigungsflächen (13) betätigbar sind, dadurch gekennzeichnet, daß ein dritter Endschalter (10), der bezüglich der Betätigungsfläche (13) für den ersten Endschalter (8) in größerem Abstand entsprechend einer zweiten größeren vorbestimmten Kraft angeordnet ist, und für den ersten Endschalter (8) ein Überbrückungsschalter (14) vorgesehen sind, der durch ein von dem Schneckengetriebe bewegtes Teil (3) kurz vor Erreichen der Endstellung dieses Teils betätigbar ist.

2. Schwenkantrieb nach Anspruch 1, dadurch gekennzeichnet, daß die Betätigungsflächen (13) an einem Schaltstück (7) auf der Schneckenwelle (4) vorgesehen sind.

3. Schwenkantrieb nach Anspruch 1 oder 2, dadurch gekennzeichnet, daß die Endschalter (8, 9, 10) auf von außen zugänglichen Spindeln im Abstand zu den Betätigungsflächen (13) einstellbar sind.

4. Schwenkantrieb nach einem der Ansprüche 1 bis 3, dadurch gekennzeichnet, daß das Schaltstück (7) Auflaufflächen (11) aufweist.

5. Schwenkantrieb nach einem der Ansprüche 1 bis 4, dadurch gekennzeichnet, daß das Schaltstück (7) etwa Garnrollenform besitzt.

6. Schwenkantrieb nach einem der Ansprüche 1 bis 5, dadurch gekennzeichnet, daß das Schaltstück (7) mit den Endschaltern (8, 9, 10) in einem separaten Gehäuseteil getrennt von dem Schneckengetriebe untergebracht ist.

## Claims

1. A turning drive comprising a self-locking worm gear, the worm (1) of which is axially floatingly pivoted and on both sides spring biased in axial direction, a first and a second limit switch (8, 9) each for switching-off in one direction of rotation in the case of exceeding a first predetermined force being actuable by said worm via corresponding actuation surfaces (13), characterized in that a third limit switch (10) being arranged in a greater distance with respect to the actuation surface (13) for the first limit switch (8) corresponding to a second greater predetermined force and a bridging switch (14) for the first limit switch (8) are provided, said bridging switch being actuable by a part (3), which is moved by said worm gear, shortly before reaching the end position of the said part.

2. The turning drive according to claim 1, characterized in that the actuation surfaces (13) are provided on a switching element (7) positioned on the worm shaft (4).

3. The turning device according to claim 1 or 2, characterized in that the limit switches (8, 9, 10) are adjustably with respect to the distance to the actuation surfaces (13) arranged on spindles accessible from the exterior.

4. The turning drive according to one of the claims 1 to 3, characterized in that the switching element (7) has ramp surfaces (11).

5. The turning drive according to one of the claims 1 to 4, characterized in that the switching element (7) has nearly the shape of a yarn bobbin.

6. The turning drive according to one of the claims 1 to 5, characterized in that the switching element (7) together with the limit switches (8, 9, 10) is arranged within a particular housing part separated from the worm gear.

## Revendications

1. Commande basculante contenant un engrenage à vis sans fin enrayant à soi-même, dont la vis sans fin (1) est montée en manière nageante en direction axiale et tendue des deux côtés par des ressorts en direction axiale, par laquelle un premier et un deuxième interrupteur de fin de course (8, 9) chacun pour l'interruption dans une direction de rotation sont actionnables par des surfaces d'actionnement (13) en cas qu'une première force prédéterminée est dépassée, caractérisée en ce qu'un troisième interrupteur de fin de course (10) qui est monté dans une distance plus grande comme le premier interrupteur de fin de course (8) relatif à la surface d'actionnement (13) du dernier et correspondante à une deuxième force prédéterminée et en outre un interrupteur de court-circuit (14) pour le premier interrupteur de fin de course (8) sont prévus qui est actionnable par un élément qui est mû d'engrenage à vis sans fin près d'atteindre la position finale dudit élément.

2. Commande basculante selon la revendication 1, caractérisée en ce que les surfaces d'actionnement (13) sont prévues dans un élément pour l'actionnement des interrupteurs (7), ledit élément est monté sur l'arbre de la vis (4).

3. Commande basculante selon la revendication 1 ou 2, caractérisée en ce que les interrupteurs de fin de course (8, 9, 10) sont réglables par rapport à la distance des surfaces d'actionnement (13) sur des fuseaux qui sont accessibles de l'extérieur.

4. Commande basculante selon une des revendications 1 à 3, caractérisée en ce que l'élément pour l'actionnement des interrupteurs (7) a des surfaces de rampe (11).

5. Commande basculante selon une des revendications 1 à 4, caractérisée en ce que l'élément pour actionnement des interrupteurs (7) a la forme d'une bobine.

6. Commande basculante selon une des revendications 1 à 5, caractérisée en ce que l'élément pour l'actionnement des interrupteurs (7) et les interrupteurs de fin de course (8, 9, 10) sont montés dans une partie de boîte particulière qui est séparée de l'engrenage à vis sans fin.

0 154 155